# EUROPÄISCHE PATENTSCHRIFT

(11) **EP 1 424 236 B1**
(45) Veröffentlichungstag und Bekanntmachung des Hinweises auf die Patenterteilung: **01.03.2006**
(21) Anmeldenummer: 03024310.9
(22) Anmeldetag: 24.10.2003
(51) Int. Cl.: B60K 17/342, B60K 17/346, F16H 37/08

(54) **Antriebsanordnung**
Drive system
Système d'entraînement

(30) Priorität: 28.11.2002 DE 10255534
(43) Veröffentlichungstag der Anmeldung: 02.06.2004
(73) Patentinhaber: AUDI AG, 85045 Ingolstadt (DE)
(72) Erfinder: Fleischmann, Hans, 85134 Stammham (DE)
(74) Vertreter: Asch, Konrad

(56) Entgegenhaltungen:
- GB-A- 2 046 374
- GB-A- 2 189 854
- US-A- 4 317 389
- PATENT ABSTRACTS OF JAPAN vol. 008, no. 249 (M-338), 15. November 1984 (1984-11-15) -& JP 59 126153 A (AISHIN WARNER KK), 20. Juli 1984 (1984-07-20)

## Beschreibung

Die Erfindung betrifft eine Antriebsanordnung für ein an einer hinteren und einer vorderen Achse antreibbares Kraftfahrzeug, gemäß dem Oberbegriff des Patentanspruches 1.

Eine derartige Antriebsanordnung zeigt die DE 197 57 232 A1, bei der das Zwischenachsdifferential in baulich besonders gedrängter Ausführung unmittelbar in den getriebenen Scheibensatz des stufenlosen Umschlingungsgetriebes integriert ist. Die Verschachtelung dieser Bauteile bedingt allerdings eine relativ komplizierte Konstruktion der Getriebebauteile hinsichtlich der Antriebsmomentenübertragung, der hydraulischen Steuerung, etc.

Aus der gattungsgemäßen GB 2 189 854 A ist eine Antriebsanordnung für Kraftfahrzeuge mit einem Drehmomentwandler mit einer Überbrükkungskupplung bekannt, dessen Turbinenwelle sich durch eine als Hohlwelle ausgebildete Primärwelle eines stufenlos regelbaren Umschlingungsgetriebes zu einem an dem den Drehmomentwandler abliegenden Ende angeordneten Vorwärtsgang-Rückwartsgang-Umschalt-Planetenradsatz erstreckt und mit dessen Eingangsglied treibend verbunden ist. Das Ausgangsglied des Planetenradsatzes ist treibend mit der hohlen Primärwelle verbunden, die über ein Zug- oder Schuborgan mit der Sekundärwelle des Umschlingungsgetriebes treibend verbunden ist und die das Eingangsglied eines in einem seitlich offenen Gehäuseteil angeordneten Untersetzungs-Planetenradsatzes antreibt, dessen Ringrad im Gehäuse festgelegt ist und dessen Ausgangsglied mittelbar eine sich durch die hohle Sekundärwelle erstreckende Antriebswelle antreibt. Zur Ausbildung eines Basis-Antriebsaggregates, das sowohl für Kraftfahrzeuge mit quer eingebautem Antriebsmotor und angetriebenen Vorderrädern als auch für Kraftfahrzeuge mit längs angeordnetem Antriebsmotor und einer über eine herkömmliche Gelenkwelle angetriebenen Differential-Hinterachsantriebseinheit sowie zusätzlich für den zusätzlichen Antrieb der Vorderräder bei einem solchen Kraftfahrzeug anwendbar ist, ist der Untersetzungs-Planetenradsatz in einem seitlich offenen Raum des Getriebegehäuseteiles freitragend angeordnet, wobei der Planetenradträger als Anschlusselement ausgebildet ist. Ein solches Antriebsaggregat soll für unterschiedliche Nutzungsarten einsetzbar sein, in dem unterschiedliche Gehäuseteile bzw. Anschlussteile angeflanscht werden können.

Aus der GB 2 046 374 A ist eine Antriebsanordnung für ein Kraftfahrzeug bekannt, die ein Umschlingungsgetriebe in Verbindung mit einer Flüssigkeitskupplung aufweist, wobei ferner zusätzlich eine Arretierkupplung vorgesehen ist, die mit dem Ausgangsabschnitt der Flüssigkeitskupplung über eine Hülse verbunden ist, die außerdem den Antrieb zum Antriebsscheibensatz des Umschlingungsgetriebes darstellt. Die Arretierkupplung ist mit dem Eingangsabschnitt der Flüssigkeitskupplung über eine sich durch die Hülse erstreckende Welle verbunden, die durch einen flexiblen Torsionsstab gebildet ist. Dadurch soll ein kompaktes Antriebsaggregat zur Verfügung gestellt werden.

Ein herkömmlicher Aufbau mit einem Umschlingungsgetriebe ist auch aus der US 4,317,389 sowie der JP 59126153 A bekannt.

Aufgabe der Erfindung ist es, eine alternative Antriebsanordnung für ein an einer vorderen und hinteren Achse antreibbares Kraftfahrzeug zu schaffen, das robust, montagetechnisch einfach und fertigungstechnisch günstig ist.

Diese Aufgabe wird gelöst mit den Merkmalen des Anspruchs 1. Vorteilhafte Weiterbildungen der Erfindung sind Gegenstand der Unteransprüche.

Nach Anspruch 1 ist ein Führungsabschnitt der Festscheibe des Scheibensatzes über eine radial innenliegende Keilverzahnung mit einem hülsenförmigen, in den Führungsabschnitt einragenden Vorsprung des Ausgleichsgehäuses des Zwischenachsdifferentiales trieblich verbunden. Diese Steckverbindung innerhalb des Wälzlager-Innenringes ermöglicht eine einfache Montage bei unmittelbarer Antriebsmomentenübertragung vom Scheibensatz zum Ausgleichsgehäuse des z. B. Torsendifferentiales.

In konstruktiv vorteilhafter Weise kann der Innenring des Wälzlagers unmittelbar auf einem Hals des ringförmigen Führungsabschnittes der Festscheibe des Scheibensatzes sitzen.

Die Keilverzahnung ist bevorzugt etwa in der Rotationsebene des Wälzlagers positioniert, woraus eine in axialer Richtung besonders kurz bauende Konstruktion resultiert.

Des weiteren kann der Führungsabschnitt mit einer Hohlwelle der Festscheibe des Scheibensatzes fest verbunden sein, wobei die axial verstellbare Losscheibe zwischen der Festscheibe und dem Führungsabschnitt angeordnet und auf der Hohlwelle geführt ist. Bevorzugt ist der Führungsabschnitt dabei mit der Hohlwelle verschweißt. Damit bildet der gesamte getriebene Scheibensatz eine in sich unlösbare Baueinheit mit besonders steifer, robuster Abstützung zwischen deren beiderseitiger Wälzlagerung. Die axial verstellbare Losscheibe ist zudem zur sicheren Antriebsmomentenübertragung mittels einer weiteren Keilverzahnung unverdrehbar auf der Hohlwelle geführt.

In fertigungstechnisch einfacher Weise ist die durch den getriebenen Scheibensatz verlaufende Abtriebswelle über ein Axiallager an der Hohlwelle der im Getriebegehäuse unverschiebbar gelagerten Festscheibe in einer Belastungsrichtung abgestützt. Das Axiallager baut besonders kurz und kann zudem einfach mit dem Scheibensatz zusammengebaut werden; dabei kann vorteilhaft der eine Anlaufring des Axiallagers mittels eines auf der Abtriebswelle in eine entsprechende Ringnut eingesprengten Sicherungsringes gehalten sein.

Eine funktionell günstige und laufruhige Lagerung der Abtriebswelle wird des weiteren erzielt, wenn die durch den Scheibensatz verlaufende Abtriebswelle über zumindest zwei zwischen den äußeren Lagerstellen liegende Nadellager zusätzlich radial in der Hohlwelle geführt ist.

Schließlich kann wie vorstehend bereits ausgeführt das Zwischenachsdifferential ein Torsendifferential sein, dessen Ausgleichsgehäuse an der dem Wälzlager abgewandten Stirnseite über einen hülsenförmigen Dichtungsträger in einer gehäusefesten Aufnahme des Getriebes über ein weiteres Wälzlager abgestützt ist.

Ein Ausführungsbeispiel der Erfindung ist im Folgenden mit weiteren Einzelheiten näher beschrieben.

Die anliegende schematische Zeichnung zeigt einen teilweisen Längsschnitt durch den getriebenen Scheibensatz und ein benachbartes Torsendifferential eines stufenlosen Umschlingungsgetriebes für Kraftfahrzeuge.

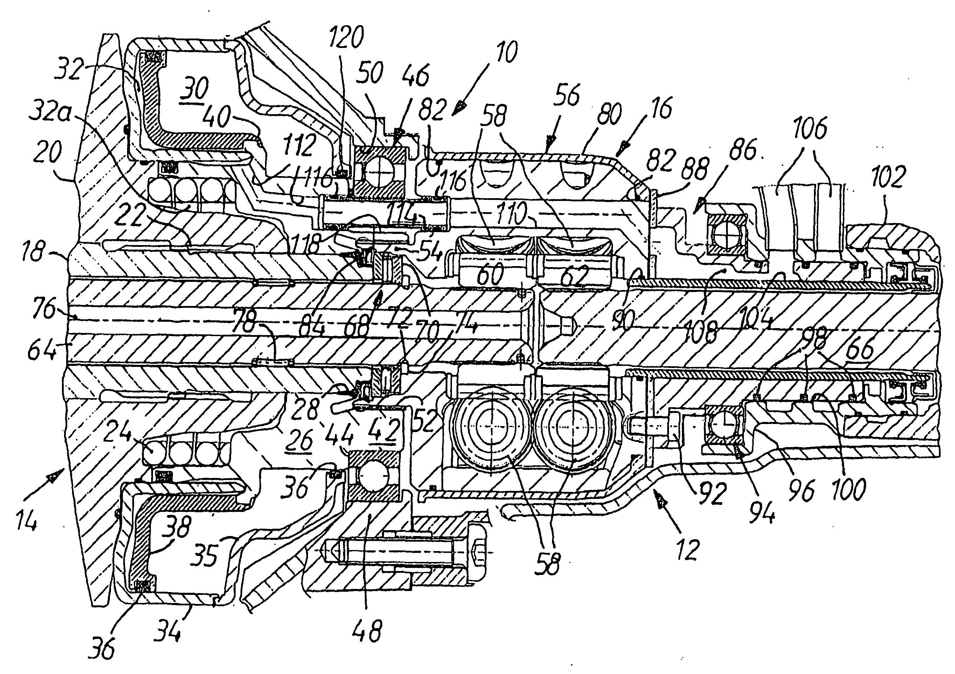

In der Zeichnung bezeichnet 10 allgemein die Antriebsanordnung, die drehbar in einem nur teilweise dargestelltem Getriebegehäuse 12 gelagert ist und die sich im wesentlichen aus einem nur teilweise ersichtlichen getriebenen Scheibensatz 14 und einem koaxial dazu benachbartem Zwischenachsdifferential bzw. Torsendifferential 16 zusammensetzt. Der auf der linken Seite der Zeichnung nicht ersichtliche Teil des Scheibensatzes 14 und dessen Lagerung (Kegelrollenlager) können so ausgeführt sein, wie dies in der vorgenannten DE 197 57 232 A1 der Fall ist; insoweit wird ausdrücklich darauf Bezug genommen.

Der Scheibensatz 14 ist Teil eines Umschlingungsgetriebes für Kraftfahrzeuge und wirkt in bekannter Weise über eine Kette oder ein Gliederband mit einem auf einer Getriebeeingangswelle angeordneten, antreibenden Scheibensatz (nicht dargestellt) zusammen.

Der getriebene Scheibensatz 14 weist eine Festscheibe (auf der Zeichnung nicht ersichtlich) auf, die ein gemeinsames Bauteil mit einer daran anschließenden Hohlwelle 18 bildet. Die Festscheibe ist in einer Wand des Getriebegehäuses 12 über ein zweireihiges Kegelrollenlager axial unverschiebbar gelagert (vgl. vorgenannte DE 197 57 232 A1).

Auf der Hohlwelle 18 ist die Losscheibe 20 axial verschiebbar geführt, wobei eine mit 22 bezeichnete Keilverbindung einen Formschluss in Umfangsrichtung herstellt. Dabei ist die Losscheibe 20 wie ersichtlich auf der Zeichnung nach links mittels einer Schraubendruckfeder 24 vorgespannt, die an einem Führungsabschnitt 26 abgestützt ist. Der Führungsabschnitt 26 ist durch eine ringförmige Laserschweißverbindung bei 28 fest mit der Hohlwelle 18 verbunden.

Zur Verstellung der Losscheibe 20 relativ zur nicht dargestellten Festscheibe sind zwischen dem Führungsabschnitt 26 und der Losscheibe 20 mittels zusammengeschweißter und an der Losscheibe 20 festgelegter Ringbleche 34, 35 zwei ringförmige Hydraulikkammern 30, 32 gebildet, die durch allgemein mit 36 bezeichnete Dichtringe abgedichtet und durch einen ringförmigen Stellkolben 38 unterteilt sind. Der fest über eine Bördelverbindung 40 mit dem Führungsabschnitt 26 verbundene Stellkolben 38 wirkt bei entsprechender Druckbeaufschlagung der Hydraulikkammer 30, 32 als Reaktionsglied zur entsprechenden axialen Verstellung der Losscheibe 20.

Der Führungsabschnitt 26 weist einen ringförmigen Hals 42 auf, auf dessen Außenumfang der Innenring 44 eines Wälzlagers bzw. Kugellagers 46 sitzt. Das Kugellager 46 ist in einer Getriebegehäusewand 48 in einer entsprechenden Ausnehmung 50 aufgenommen und wirkt somit als weitere Drehlagerung für den Scheibensatz 14.

Am Innenumfang des ringförmigen Halses 42 ist etwa in der Rotationsebene des Kugellagers 46 eine allgemein mit 52 bezeichnete Keilverzahnung eingearbeitet, die mit einer korrespondierenden Keilverzahnung auf einem hülsenförmigen Vorsprung 54 des Ausgleichsgehäuses 56 des Torsendifferentiales 16 als triebliche Verbindung zusammenwirkt.

In dem Ausgleichsgehäuse 56 sind in bekannter Weise drei gleichmäßig über dessen Umfang verteilte Schneckenräderpaare 58 gelagert, die mit entsprechenden Abtriebsrädern 60, 62 in Eingriff sind. Die Abtriebsräder 60, 62 sitzen drehschlüssig auf Abtriebswellen 64, 66, von denen die Abtriebswelle 64 durch die Hohlwelle 18 hindurch über ein nicht dargestelltes Antriebsritzel und ein vorderes Differential die Vorderräder des Kraftfahrzeuges und die Abtriebswelle 66 über eine angeschlossene Kardanwelle und ein hinteres Differential die Hinterräder des Kraftfahrzeuges antreibt.

Die Antriebswelle 64 ist neben der nicht dargestellten Lagerung im Bereich des Antriebsritzels (vgl. wiederum die vorgenannte DE 197 57 232 A1) in der einen Belastungsrichtung über ein Axiallager 68 an der Hohlwelle 18 abgestützt, wobei dessen einer Anlaufring 70 an einem in eine Ringnut 72 eingesprengten Sicherungsring 74 gehalten ist.

Das Torsendifferential 16 bzw. dessen Funktionsteile sind wie bei der vorgenannten DE 197 57 232 A1 mit dem Schmieröl aus dem nicht dargestelltem vorderen Differential beölt, wobei ein in der Abtriebswelle 64 vorgesehener Zuführkanal 76 in das Ausgleichsgehäuse 56 mündet. Die Rückführung des Schmieröles erfolgt in der Gegenrichtung durch die Hohlwelle 18 hindurch, wobei neben dem Axiallager 68 auch noch zwei radial abstützende Nadellager 78 (es ist nur ein Nadellager 78 ersichtlich, das zweite ist etwa im Bereich der Festscheibe positioniert) zwischen der Hohlwelle 18 und der Abtriebswelle 64 beölt werden.

Das Torsendifferential 16 ist vollständig gekapselt ausgebildet, um nur eine Beölung der beschriebenen Funktionsteile mit dem Differential-Schmieröl (einem Hypoidöl) sicherzustellen. Dazu ist ein das Ausgleichsgehäuse 56 umschließendes, ringförmiges Abdeckteil 80 vorgesehen, das in Verbindung mit Dichtringen 82 das Ausgleichsgehäuse 56 nach außen abdichtet. Ein weiterer Dichtring 84 ist im Bereich der Keilverzahnung 52 zwischen der Hohlwelle 18 und dem hülsenförmigen Vorsprung 54 des Ausgleichsgehäuses 56 eingesetzt.

Die stirnseitige Abdichtung des Ausgleichsgehäuses 56 bewirkt schließlich ein hülsenförmiger Dichtungsträger 86, dessen Anschlussflansch 88 mit einem weiteren Dichtring 90 und einer axialen Abdichtung (nicht dargestellt) dicht mit dem Ausgleichsgehäuse 56 verschraubt ist (Schrauben 92).

Der Dichtungsträger 86 und dementsprechend das Ausgleichsgehäuse 56 ist mittels eines weiteren Wälzlagers bzw. Kugellagers 94 in einer entsprechenden, gehäusefesten Aufnahme 96 drehbar gelagert, wobei der mit Kolbenringen 98 bestückte Dichtungsträger 86 wie ersichtlich in eine zylindrische Bohrung 100 des die Aufnahme 96 aufweisenden Gehäuseteiles 102 einragt.

Über den Dichtungsträger 86 und eine in diesen eingesetzte Innenhülse 104 können über die ersichtlichen Kanäle 106 im Gehäuseteil 102, über die Kanäle 108 im Dichtungsträger 86, über im Ausgleichsgehäuse 56 eingearbeitete Kanäle 110 (es ist in der Schnittansicht nur ein Kanal 110 ersichtlich) und schließlich über korrespondierende Kanäle 112 im Führungsabschnitt 26 die Hydraulikkammern 30, 32, 32a mit einem unter Druck stehendem Hydraulikmedium zur Steuerung der Antriebsübersetzung des Umschlingungsgetriebes beaufschlagt werden.

Die hydraulische Verbindung zwischen den Kanälen 110 im Ausgleichsgehäuse 56 und den Kanälen 112 im Führungsabschnitt 26 sind durch Steckrohre 114 gebildet.

Die Steckrohre 114 ragen dazu unter Zwischenschaltung von Dichtringen 116 einerseits in eine entsprechende stimseitige Ausnehmung des Führungsabschnittes 26 und des Ausgleichsgehäuses 56, wobei sie durch im Querschnitt betrachtet halbkreisförmige und radial nach außen offene Ausnehmungen 118 des Führungsabschnittes 26 innerhalb des Innenringes 44 des Kugellagers 46 hindurch geführt sind. Die Steckrohre 114 (es sind zur Verstellung der Losscheibe 20 drei gleichmäßig über den Umfang des Führungsabschnittes 26 bzw. des Ausgleichsgehäuses 56 verteilte Steckrohre angeordnet) sind mittels an diese angeformte, radiale Vorsprünge 120 zwischen dem Innenring 44 und einer entsprechenden stirnseitigen Ausnehmung des Führungsabschnittes 26 gehalten. Ohne radialen Vorsprung könnte eine Halterung durch den axialen Anschlag an den Stirnflächen der Steckrohre erfolgen.

## Patentansprüche

1. Antriebsanordnung für ein an einer vorderen und einer hinteren Achse antreibbares Kraftfahrzeug, mit einem stufenlosen Getriebe mit einem antreibenden und einem getriebenen Scheibensatz (14) für ein Zugmittel und mit einem Zwischenachsdifferential (16), das an den getriebenen Scheibensatz (14) angebaut ist, wobei der Durchtrieb zur einen Achse durch den Scheibensatz (14) hindurch erfolgt und wobei zwischen dem getriebenen Scheibensatz (14) und dem Zwischenachsdifferential (16) ein an einer Getriebegehäusewand (48) abgestütztes Wälzlager (46) angeordnet ist, **dadurch gekennzeichnet, dass** ein Führungsabschnitt (26) der Festscheibe des Scheibensatzes (14) über eine radial innenliegende Keilverzahnung (52) mit einem hülsenförmigen, in den Führungsabschnitt (26) einragenden Vorsprung (54) des Ausgleichsgehäuses (56) des Zwischenachsdifferentiales (16) trieblich verbunden ist.

2. Antriebsanordnung nach Anspruch 1, **dadurch gekennzeichnet, dass** der Innenring (44) des Wälzlagers (46) unmittelbar auf einem Hals (42) des ringförmigen Führungsabschnittes (26) der Festscheibe des Scheibensatzes (14) sitzt.

3. Antriebsanordnung nach Anspruch 1 oder 2, **dadurch gekennzeichnet, dass** die Keilverzahnung (52) in der Rotationsebene des Wälzlagers (46) positioniert ist.

4. Antriebsanordnung nach einem oder mehreren der Ansprüche 1 bis 3, **dadurch gekennzeichnet, dass** der Führungsabschnitt (26) mit einer Hohlwelle (18) der Festscheibe des Scheibensatzes (14) fest verbun-den ist, wobei die axial verstellbare Losscheibe (20) zwischen der Festscheibe und dem Führungsabschnitt (26) angeordnet und auf der Hohlwelle (18) geführt ist.

5. Antriebsanordnung nach einem oder mehreren der Ansprüche 1 bis 4, **dadurch gekennzeichnet, dass** der Führungsabschnitt (26) mit der Hohlwelle (18) verschweißt ist.

6. Antriebsanordnung nach einem oder mehreren der Ansprüche 1 bis 5, **dadurch gekennzeichnet, dass** die axial verstellbare Losscheibe (20) mittels einer weiteren Keilverzahnung (22) unverdrehbar auf der Hohlwelle (18) geführt ist.

7. Antriebsanordnung nach einem oder mehreren der Ansprüche 1 bis 6, **dadurch gekennzeichnet, dass** die durch den getriebenen Scheibensatz (14) verlaufende Abtriebswelle (64) über ein Axiallager (68) an der Hohlwelle (18) der im Getriebegehäuse (12) unverschiebbar gelagerten Festscheibe in einer Belastungsrichtung abgestützt ist.

8. Antriebsanordnung nach Anspruch 7, **dadurch gekennzeichnet, dass** der eine Anlaufring (70) des Axiallagers (68) mittels eines auf der Abtriebswelle (64) in eine entsprechende Ringnut (72) eingesprengten Sicherungsringes (74) gehalten ist.

9. Antriebsanordnung nach einem oder mehreren der Ansprüche 1 bis 8, **dadurch gekennzeichnet, dass** die durch den Scheibensatz (14) verlaufende Abtriebswelle (64) über zumindest zwei zwischen den axial äußeren Lagerstellen liegende Nadellager (78) zusätzlich radial in der Hohlwelle (18) geführt ist.

10. Antriebsanordnung nach einem oder mehreren der Ansprüche 1 bis 9, **dadurch gekennzeichnet, dass** das Zwischenachsdifferential ein Torsendifferential (16) ist, dessen Ausgleichsgehäuse (56) an der dem Wälzlager (46) abgewandten Stirnseite über einen hülsenförmigen Dichtungsträger (86) in einer gehäusefesten Aufnahme (96) des Getriebes (10) über ein weiteres Wälzlager (94) geführt ist.

## Claims

1. Drive system for a motor vehicle which can be driven on a front and a rear axle, with an infinitely variable drive with a driving and a driven disc set (14) for a means of traction and with an intermediate axle differential (16), which is fitted on the driven disc set (14), in which driving through to one axle takes place through the disc set (14) and in which a roller bearing (46) supported on a gear box wall (48) is arranged between the driven disc set (14) and the intermediate axle differential (16), **characterised in that** a guide section (26) of the fixed disc of the disc set (14) is connected by driving through internal radial splining (52) with a tube shaped projection (54) of the differential housing (56) of the intermediate axle differential (16) jutting out into the guide section (26).

2. Drive system according to claim 1, **characterised in that** the inner ring (44) of the roller bearing (46) sits directly on a neck (42) of the ring shaped guide section (26) of the fixed disc of the disc set (14).

3. Drive system according to claim 1 or 2, **characterised in that** the splining (52) is positioned in the rotational plane of the roller bearing (46).

4. Drive system according to one or several of claims 1 to 3, **characterised in that** the guide section (26) is connected firmly with a hollow shaft (18) of the fixed disc of the disc set (14), in which the loose disc (20), which is axially adjustable, is arranged between the fixed disc and the guide section (26) and guided on the hollow shaft (18).

5. Drive system according to one or several of claims 1 to 4, **characterised in that** the guide section (26) is welded to the hollow shaft (18).

6. Drive system according to one or several of claims 1 to 5, **characterised in that** the loose disc (20), which is axially adjustable, is guided on the hollow shaft (18) by means of further splining (22) so that it cannot be twisted.

7. Drive system according to one or several of claims 1 to 6, **characterised in that** the output shaft (64) running through the driven disc set (14) is supported by an axial bearing (68) on the hollow shaft (18) of the fixed disc in the gear case (12), which is supported so it cannot shift, in a loading direction.

8. Drive system according to claim 7, **characterised in that** a thrust ring (70) of the axial bearing (68) is held in a corresponding ring groove (72) by means of a retaining ring (74), which is locked shut on the output shaft (64).

9. Drive system according to one or several of claims 1 to 8, **characterised in that** the output shaft (64) running through the disc set (14) is guided over at least two needle bearings (78) lying between the axial external bearings additionally radially in the hollow shaft (18).

10. Drive system according to one or several of claims 1 to 9, **characterised in that** the intermediate axle differential is a torsen differential (16), the differential housing (56) of which is guided through a tube shaped sealing carrier (86) on the face turned away from the roller bearing (46) in a pickup (96), which is attached to the housing, of the gear (10) over another roller bearing (94).

## Revendications

1. Système d'entraînement pour un véhicule automobile pouvant être actionné au niveau d'un essieu avant et d'un essieu arrière, comportant une transmission à réglage continu avec un groupe de poulies d'entraînement et un groupe de poulies entraîné (14) pour un mécanisme de traction et comportant un différentiel interponts (16), qui est monté sur le groupe de poulies (14) entraîné, la commande vers un essieu s'effectuant à travers le groupe de poulies (14), et un palier à roulements (46), en appui sur une paroi (48) du carter de protection de la transmission, étant disposé entre le groupe de poulies (14) entraîné et le différentiel interponts (16), **caractérisé en ce qu'**un tronçon de guidage (26) de la poulie fixe du groupe de poulies (14) est relié en entraînement, par l'intermédiaire d'un engrenage conique (52) radialement intérieur, à une saillie (54) du boîtier (56) du différentiel interponts (16), en forme de manchon s'engageant dans le tronçon de guidage (26).

2. Système d'entraînement selon la revendication 1, **caractérisé en ce que** la bague intérieure (44) du palier à roulements (46) est posée directement sur un col (42) du tronçon de guidage (26) en forme de bague, de la poulie fixe du groupe de poulies (14).

3. Système d'entraînement selon la revendication 1 ou 2, **caractérisé en ce que** l'engrenage conique (52) est positionné dans le plan de rotation du palier à roulements (46).

4. Système d'entraînement selon une ou plusieurs des revendications 1 à 3, **caractérisé en ce que** le tronçon de guidage (26) est relié de manière fixe à un arbre creux (18) de la poulie fixe du groupe de poulies (14), la poulie folle (20) axialement réglable étant agencée entre la poulie fixe et le tronçon de guidage (26) et étant guidée sur l'arbre creux (18).

5. Système d'entraînement selon une ou plusieurs des revendications 1 à 4, **caractérisé en ce que** le tronçon de guidage (26) est soudé avec l'arbre creux (18).

6. Système d'entraînement selon une ou plusieurs des revendications 1 à 5, **caractérisé en ce que** la poulie folle (20) axialement réglable est guidée de manière immobile en rotation sur l'arbre creux (18) au moyen d'un autre engrenage conique (22).

7. Système d'entraînement selon une ou plusieurs des revendications 1 à 6, **caractérisé en ce que** l'arbre de sortie (64) passant à travers le groupe de poulies (14) entraîné est en appui dans une direction de sollicitation, par l'intermédiaire d'un palier de butée (68), sur l'arbre creux (18) de la poulie fixe montée immobile dans le carter de protection (12) de la transmission.

8. Système d'entraînement selon la revendication 7, **caractérisé en ce que** l'une des bagues de butée (70) du palier de butée (68) est maintenue au moyen d'une bague de sécurité (74) insérée sur l'arbre de sortie (64) dans une rainure annulaire (72) correspondante.

9. Système d'entraînement selon une ou plusieurs des revendications 1 à 8, **caractérisé en ce que** l'arbre de sortie (64) passant à travers le groupe de poulies (14) est guidé, de surcroît radialement dans l'arbre creux (18), par l'intermédiaire d'au moins deux roulements à aiguilles (78) situés entre les zones de palier axialement extérieures.

10. Système d'entraînement selon une ou plusieurs des revendications 1 à 9, **caractérisé en ce que** le différentiel interponts est un différentiel Torsen (16), dont le boîtier (56), au niveau de la face frontale opposée au palier à roulements (46), est guidé par l'intermédiaire d'un autre palier à roulements (94) par l'intermédiaire d'un support de joint d'étanchéité (86), en forme de manchon, dans un logement (96) solidaire du carter de la transmission (10).
